# EUROPÄISCHE PATENTSCHRIFT

(11) **EP 1 421 767 B1**
(45) Veröffentlichungstag und Bekanntmachung des Hinweises auf die Patenterteilung: **14.01.2015**
(21) Anmeldenummer: 02755002.9
(22) Anmeldetag: 21.08.2002
(51) Int. Cl.: H04M 3/493, H04L 29/06

(54) **ANORDNUNG ZUM BEREITSTELLEN VON ANSAGEN UND DIALOGEN IN PAKETNETZEN**
ARRANGEMENT FOR THE PROVISION OF MESSAGES AND DIALOGUES IN PACKET NETWORKS
DISPOSITIF POUR FOURNIR DES ANNONCES ET DES DIALOGUES DANS DES RESEAUX DE TRANSMISSION PAR PAQUETS

(30) Priorität: 31.08.2001 DE 10142613
(43) Veröffentlichungstag der Anmeldung: 26.05.2004
(73) Patentinhaber: Nokia Solutions and Networks GmbH & Co. KG, 81541 Munich (DE)
(72) Erfinder: FRANZ, Mathias, 10178 Berlin (DE); JUGEL, Alfred, 82538 Geretsried (DE); KLEINER, Patrick, 81476 München (DE); LÖBIG, Norbert, 64291 Darmstadt (DE); PULVERER, Klaus, 81369 München (DE)
(74) Vertreter: Weidel, Gottfried
(86) Internationale Anmeldenummer: PCT/EP2002/009341
(87) Internationale Veröffentlichungsnummer: WO 2003/021912

(56) Entgegenhaltungen:
- WO-A-00/31933
- WO-A-01/37501

## Beschreibung

Die vorliegende Erfindung betrifft eine Vermittlungsstelle für ein Telekommunikationsnetz mit einer Ansage-/ Dialogvorrichtung zum Bereitstellen von Ansagen und/oder Dialogen für Teilnehmer.

Aus der Patentanmeldung WO 00/31933 ist ein System und ein Verfahren bekannt zum Kommunizieren von Sprache und Daten über ein paketvermitteltes Netz, welches angepasst ist, mit einem legacy PSTN zu koexistieren und zu kommunizieren. Das System erlaubt die Paketvermittlung von Sprach- und Datenverbindungen über ein Datennetz zwischen carrier Einrichtungen (z. B. Local Exchange Carriers), Kundeneinrichtungen (z. B. PBX) oder über direkte IP Verbindungen über das Datennetz. Das System umfasst insbesondere Soft Switch Sites, Gateway Sites und ein Datennetz. Ansagen werden über einen paketbasierten Annoucement Server bereitgestellt, der beispielsweise in den Gateway Sites integriert sein kann. Dialoge werden über dedizierte Netzelemente für Interactive Voice Response (IVR) bereitgestellt.

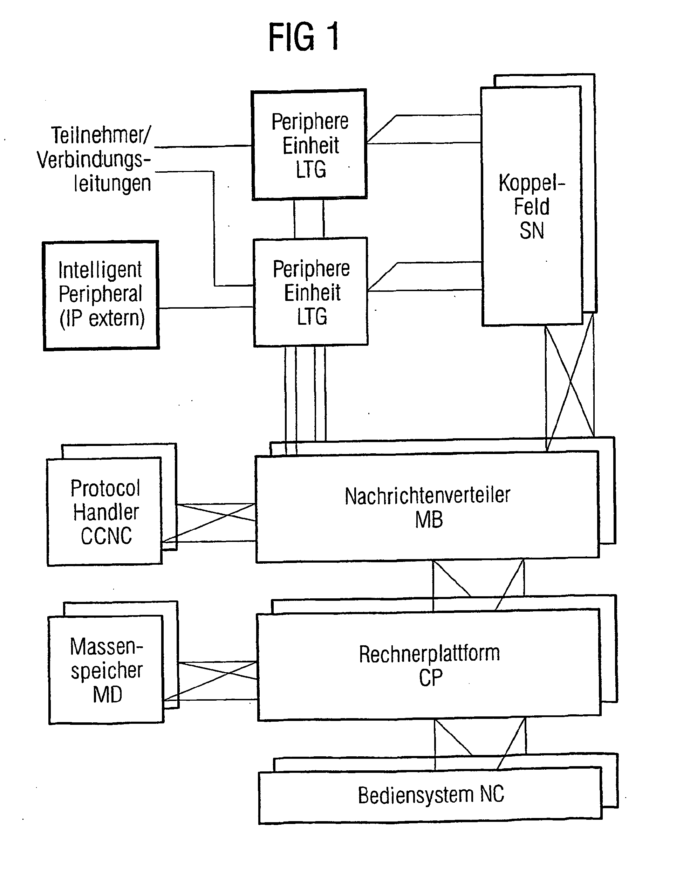

Wie in Figur 1 gezeigt wird, besteht ein Vermittlungsknoten im Allgemeinen aus peripheren Einheiten LTG (Anschlusseinrichtungen für Teilnehmer oder Leitungen), einer zentralen Rechnerplattform CP, einer Nachrichtenverteileinrichtung MB und weiteren, zentralen Einheiten, wie z. B. Koppelfeld SN, Protokollabschlusseinrichtungen CCNC (z. B. für das Zeichengabesystem Nr. 7), Hintergrundspeicher MD, Bedieneinrichtungen NC, usw.

Die peripheren Einrichtungen erfüllen wesentliche, an die Sprachkanäle der peripheren Einrichtung gebundene vermittlungstechnische Aufgaben. Sie enthalten daher vermittlungstechnische, betriebstechnische und administrative Programme sowie die der Einrichtung zugehörigen Dateninformationen, wie Anschlusslage, Signalisierung, Berechtigungen, Rufnummern, individuelle Charakteristika von Verbindungsleitungen und Teilnehmeranschlüssen sowie Ausbauzustand und Konfiguration der jeweiligen peripheren Einrichtung.

Die zentrale Rechnerplattform dient der koordinierenden Steuerung des Verbindungsauf- und -abbaus sowie der Reaktionen auf administrative und fehlerbedingte Konfigurationsveränderungen.

Die peripheren Einrichtungen sind über das Nachrichtenverteilsystem untereinander und mit der gemeinsamen Rechnerplattform verbunden. Die weiteren zentralen Systemkomponenten stehen dem Vermittlungssystem Spezialfunktionen, z. B. für die Durchschaltung der Sprachkanäle, die Bearbeitung der Signalisierungsprotokolle, die Realisierung der Betreiberschnittstelle oder die Speicherung von Massendaten zur Verfügung.

Aus Gründen der Ausfallsicherheit sind die zentralen Komponenten eines Vermittlungssystems redundant (z. B. gedoppelt) ausgelegt. Im Allgemeinen werden die peripheren Einrichtungen nicht redundant ausgelegt. Im Falle von verschärften Ausfallanforderungen (z. B. zum retten stabiler Verbindungen über den Ausfall einer peripheren Einrichtung hinaus) können sie jedoch redundant ausgebaut sein.

Werden Signalisierung und Sprache disassoziert auf getrennten Wegen geführt und haben die peripheren Einrichtungen nur noch die Aufgabe der Signalisierungsverarbeitung und/oder Konversion ohne physikalische Terminierung der Sprachkanäle, so entfallen Beschränkungen hinsichtlich der Anzahl terminierbarer Sprachkanäle. Diese logischen peripheren Einrichtungen werden für diesen Anwendungsfall hinsichtlich ihrer Kapazität durch die Leistung der Prozessoren, die Größe des Speichers und die Kapazität der Nachrichtenschnittstelle bestimmt.

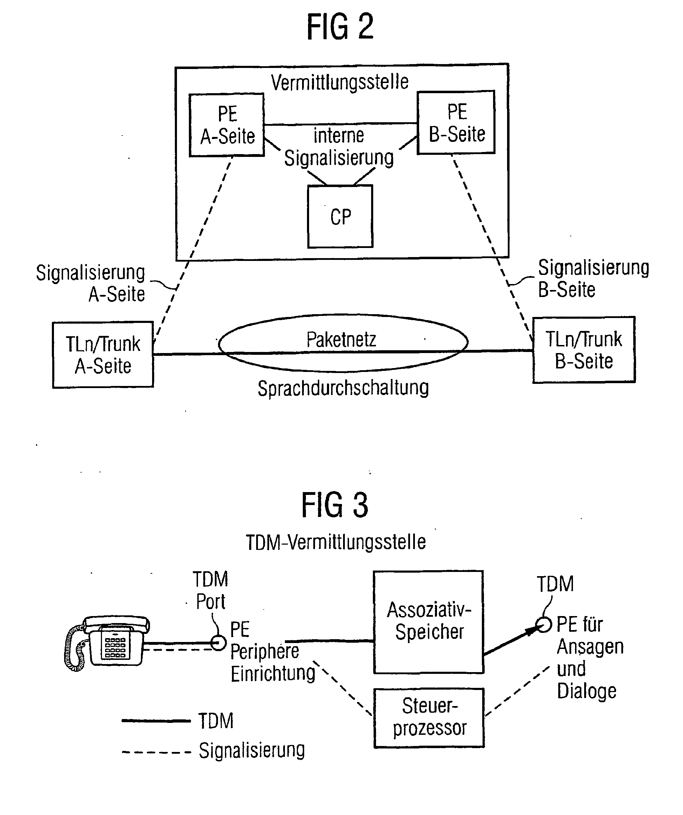

Da für die Durchschaltung der Sprache zwischen einem A-Teilnehmer oder einem A-seitigen Trunk (d. h. eine Verbindungsleitung zu einer fernen Vermittlungsstelle) und einem B-Teilnehmer oder einem B-seitigen Trunk mehr als eine Richtung zur Verfügung gestellt werden muss, sind im Allgemeinen stets zwei verschiedene periphere Einrichtungen (PE) in den Verbindungsauf- und -abbau involviert, wie in Figur 2 gezeigt wird.

Die klassische periphere Einrichtung terminiert genau die Verbindungsleitungen, für deren vermittlungstechnische Bearbeitung sie zuständig ist. Üblicherweise finden sich periphere Einrichtungen zur Terminierung von n PCM30- (Pulse Code Modulation) Strecken (z. B. n = 4 für 120 Verbindungsleitungen). Im vorliegenden Anwendungsfall, in dem die Sprache außerhalb der Vermittlungsstelle geführt wird, entfällt die Beschränkung auf die physikalisch bestimmte maximale Anzahl terminierbarer Verbindungsleitungen. Für diesen Einsatzfall kann eine periphere Einrichtung z. B. mehr als 120 Verbindungen gleichzeitig bearbeiten. Ein Netz-Szenario, in dem Vermittlungsstellen für außerhalb der Vermittlungsstelle geführte Verbindungen zum Einsatz kommen, ist in Figur 3 dargestellt.

Die für die Steuerung von außerhalb der Vermittlungsstelle geführten Verbindungen tätige Vermittlungststelle kann dem A- und/oder dem B-seitigen Teilnehmer von klassischen TDM-Netzen (klassisches Fernsprechnetz im Zeitmultiplexverfahren) bekannte Teilnehmer- oder Netz-Leistungsmerkmale zur Verfügung stellen. Hierzu gehören insbesondere Ansagen und Dialoge, die in gewissen Situationen notwendig werden (z. B. "kein Anschluss unter dieser Nummer", "die Rufnummer hat sich geändert, die neue Rufnummer ist 722-25940" oder der Abfrage zur Berechtigung zur Einwahl in ein Paketnetz).

In dem klassischen Fall, in dem der Nutzkanal der Verbindung in die Vermittlungsstelle hineingeführt wird, können diese Ansagen und Dialoge von mit entsprechender Funktionalität ausgerüsteten peripheren Einrichtungen bereitgestellt werden. Werden die Nutzdaten jedoch außerhalb der Vermittlungsstelle in einem Paketnetz geführt, so wird hierzu oft ein externes System genutzt (IVR, Interactive Voice Response System). Alternativ ist jedoch die Nutzung existierender TDM-basierter Ansagesysteme auch für Paketnetzverbindungen denkbar.

Beim Stand der Technik sind verfügbare IVR-Systeme in der Regel TDM-basiert (Time Division Multiplex) und vereinen das gesamte funktionale Spektrum, um universell einsetzbar zu sein. Der Nachteil dieser Universalität sind jedoch die Kosten, die einen möglichst effektiven Einsatz eines IVR-Systems bedingen. In TDM-basierten Datenübertragungsnetzen (z. B. dem klassischen Fernsprechnetz) mit konventionellen Vermittlungsstellen sind zwei Einsatzszenarien gebräuchlich, die nachfolgend beschrieben werden:
Zum einen werden periphere Einrichtungen der Vermittlungsstelle mit Hardware-Modulen zur Bereitstellung von Ansagen sowie DTMF(Discrete Tone Multi Frequency)- und/oder Spracherkennung in die Vermittlungsstelle eingebracht. Zum Abspielen einer Ansage oder eines Dialoges wird der Teilnehmer/Trunk über eine 64 kbit/s-Durchschaltung auf einem physikalischen Port dieser speziellen peripheren Einrichtung für Ansagen und Dialoge geschaltet.

Aus vermittlungstechnischer Sicht handelt es sich hierbei um eine Durchschaltung von einer A-seitigen peripheren Einrichtung über das Koppelnetz zur B-seitigen peripheren Einrichtung mit Ansage- und/oder Dialogfunktionalität geführten Verbindung. Der B-seitige Ansage/Dialog-Port wirkt wie ein B-seitiger Trunk. Die Art der zu spielenden Ansage- bzw. Dialogfunktionen erfolgt durch vermittlungsstelleninterne Signalisierung zur peripheren Einrichtung mit Ansage- und/oder Dialogfunktionen oder ist fest vordefiniert.

Der Vorteil dieser Realisierung besteht in der Integration der Ansage- und/oder Dialogfunktionen in die Vermittlungsstelle, die sehr kostengünstig ist. Weiterhin kann ein breiter Zugriff auf die Hardware-Funktionalität der peripheren Einrichtung für Ansage- und/oder Dialogfunktionalität erfolgen.

Der Nachteil dieser Realisierung besteht jedoch darin, dass, falls der Nutzkanal paketbasiert ist oder außerhalb der Vermittlungsstelle geführt wird, diese Funktionalität nicht oder nur mit einem vorgelagertem Media Gateway, das den Netzübergang zwischen dem TDM-basierten Datenübertragungsnetz (klassisches Fernsprechnetz) und dem Paketnetz (z. B. Internet) darstellt, anwendbar ist.

Weiterhin müssen die Sprachdaten, die beim Stand der Technik in PCM/TDM-Technologie (Puls Code Modulation/Time Division Multiplex) vorliegen, in Paketdaten umgewandelt werden. Außerdem entsteht eine Nutzdatenlast für Ansagen und Dialoge an der steuernden Vermittlungsstelle und verfolgt eine Sprachqualitätseinbuße durch eine Wandlung der Nutzdaten von TDM/PCM-Systemen in Paketdaten.

Zum anderen werden auch Ansagen und Dialoge ebenfalls am Netzübergang zwischen Paket- und TDM-Netz bereitgestellt oder durch eigens für Ansage- und/oder Dialogfunktionen konzipierte paketbasierte IVR-Systeme. Hierbei erfolgt die Steuerung der Ansage- und/oder Dialogfunktionen durch einen die Verbindung steuernden Call Control Server in der Vermittlungsstelle.

Die Vorteile dieses Systems bestehen darin, dass es in paketvermittelnden Datenübertragungsnetzen (Paketnetzen) verwendet werden kann, ohne dass dafür TDM-Equipment bereitgestellt werden muss, da keine zusätzliche Wandlung der Nutzdaten vom TDM-System zu Paketdaten erfolgen muss.

Der Nachteil dieses Systems besteht jedoch darin, dass die Vermittlungsstelle, die die Vermittlungsstelle für im Paketnetz geführte Verbindungen steuert, keinen Zugriff auf die im Paketnetz vorhandenen IVR-Funktionen hat.

Die Aufgabe der vorliegenden Erfindung ist somit, eine Vermittlungsstelle für ein Telekommunikationsnetz mit einer Ansage-/ Dialogvorrichtung zum Bereitstellen von Ansagen und/oder Dialogen für Teilnehmer, bei denen eine Nutzung der Ansage- und/oder Dialogfunktionen sowohl für das klassische Fernsprechnetz im TDM-Verfahren (leitungsvermitteltes Datenübertragungsnetz) als auch über ein Paketnetz (paketvermitteltes Datenübertragungsnetz) erfolgen kann.

Diese Aufgabe wird durch eine Vermittlungsstelle für ein Telekommunikationsnetz mit einer Ansage-/ Dialogvorrichtung zum Bereitstellen von Ansagen und/oder Dialogen für Teilnehmer gemäß dem beigefügten Anspruch 1 gelöst.

Die Ansage-/ Dialogvorrichtung weist jeweils eine Schnittstelle für ein paketvermitteltes Datenübertragungsnetz (Paketnetz) und ein leitungsvermitteltes Datenübertragungsnetz (klassisches Fernsprechnetz im TDM-System) auf.

Die erfindungsgemäße Vermittlungsstelle beinhaltet einen virtuellen Port, der auf der Schnittstelle zum paketorientierten Datenübertragungsnetz definiert ist, zum verbindungsorientierten Steuern der Funktionen der Ansage-/ Dialogvorrichtung bei einer über das paketvermittelte Datenübertragungsnetz geführten Verbindung zum Übertragen von Ansagen und/oder Dialogen zu einem Teilnehmer.

Weiterhin beinhaltet die erfindungsgemäße Vermittlungsstelle einen physikalischen Port zum Übertragen von Ansagen und/oder Dialogen bei einer über das leitungsvermittelte Datenübertragungsnetz geführten Verbindung zum Übertragen von Ansagen und/oder Dialogen zu einem Teilnehmer.

Die vorliegende Erfindung hat den Vorteil, dass ein klassisches Ansage-/Dialog-System einer herkömmlichen TDM-Vermittlungsstelle für Verbindungen aus einem externen, TDM-fremden Datenübertragungsnetz (z. B. Paketnetz) so gesteuert werden kann, dass insbesondere die aus klassischen Vermittlungsstellen vorhandenen Ansage- und Dialogfunktionen für über ein Paketnetz geführte Verbindungen für die A- und/oder B-seitigen Teilnehmer verfügbar sind, beispielsweise Standardansagen mit variablen Inhalten, Dialogen mit DTMF-Eingabe oder Spracheingabe des Teilnehmers.

Weiterhin kann die in der klassischen Vermittlungsstelle verfügbare Verbindungssteuerungslogik (Call Control) zur Ansteuerung der Ansage- bzw. Dialogfunktionen verwendet werden, während die mit Ansagen und Teilnehmereingaben befrachteten Nutzdaten im Paketnetz geführt werden.

Dabei wird eine unnötige Wandlung des mit Ansagen und Teilnehmereingaben befrachteten Nutzdatenstroms auf TDM-Technik sowie TDM-Anschlusstechnik in den peripheren Einheiten der für außerhalb der Vermittlungsstelle geführten Verbindungen tätigen Vermittlungsstelle vermieden.

Außerdem kann eine Verfügbarkeit von Leistungsmerkmalen und Diensten einer klassischen Vermittlungsstelle, die Ansage- und/oder Dialogfunktionen benötigen, für die Vermittlungsstelle zur Steuerung von im Paketnetz geführten Verbindungen mit geringem Entwicklungsaufwand erreicht werden.

Vorteilhafte Ausgestaltungen der vorliegenden Erfindung sind in den jeweiligen Unteransprüchen wiedergegeben.

Bei einer über das paketvermittelnde Datenübertragungsnetz geführten Verbindung werden Lageinformationen des Teilnehmers, die über den virtuellen Port empfangen wurden, durch einen Steuerprozessor an die Ansage-/ Dialogvorrichtung übertragen.

Die Ansage-/ Dialogvorrichtung überträgt daraufhin Lageinformationen an den Teilnehmer.

Das leitungsvermittelte Datenübertragungsnetz ist beispielsweise das öffentliche Fernsprechnetz, das Sprachdaten im TDM-(Time Division Multiplex-) Verfahren bzw. im PCM- (Pulse Code Modulation-) Verfahren überträgt, und das paketvermittelte Datenübertragungsnetz (11) ein IP-basiertes (Internet-Protocol-) oder ein ATM- (Asynchronous Transfer Mode-) Datenübertragungsnetz ist.

In einem paketvermittelten Datenübertragungsnetz können die Lageinformationen z. B. IP-Adressen (oder ATM-Zelladressen) des Teilnehmers bzw. der Ansage-/ Dialogvorrichtung enthalten.

Die vorliegende Erfindung wird nachfolgend anhand bevorzugter Ausführungsbeispiele unter Bezug auf die beigefügten Figuren näher erläutert, in denen zeigen:
Fig. 1 die typische Architektur eines Vermittlungssystems mit ungedoppelten peripheren Anschlusseinheiten,
Fig. 2 eine Darstellung bei getrennter Wegelenkung von Sprache und Signalisierung,
Fig. 3 die Ansteuerung von Ansagen in klassischen Fernsprechnetzen,
Fig. 4 eine schematische Darstellung der erfindungsgemäßen Vermittlungsstelle,
Fig. 5 eine schematische Darstellung der Datenübertragung bei einer Verbindung über ein paketvermitteltes Datenübertragungsnetz,
Fig. 6 ein Beispiel für eine Datenübertragung über ein paketvermitteltes Datenübertragungsnetz, und
Fig. 7 ein weiteres Beispiel für eine Datenübertragung über ein paketvermitteltes Datenübertragungsnetz.

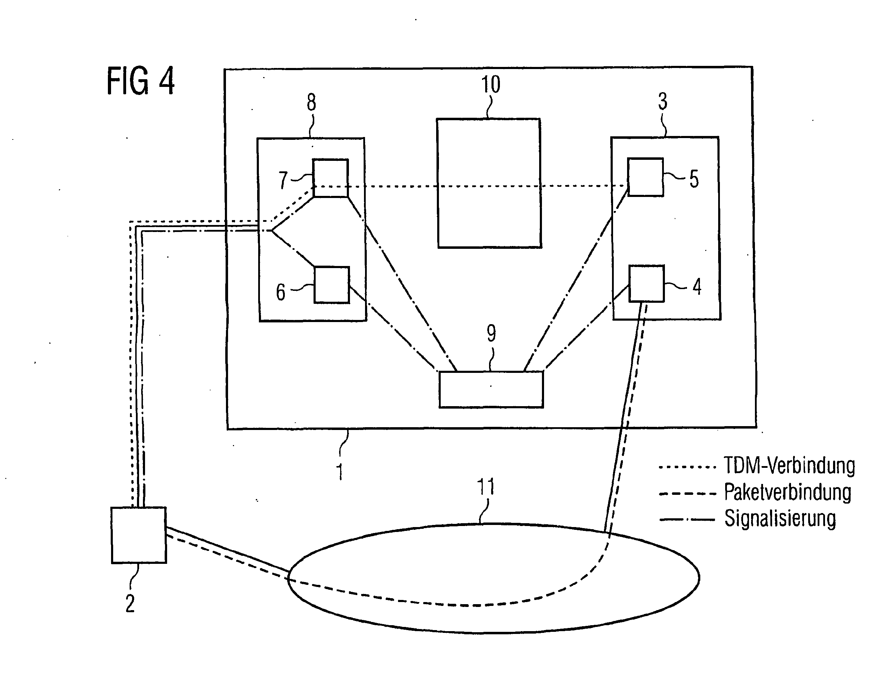

Fig. 4 zeigt eine schematische Darstellung der erfindungsgemäßen Vermittlungsstelle 1, wobei Fig. 4 sowohl die Datenübertragung von Sprachdaten über ein paketvermitteltes Datenübertragungsnetz 11 als auch über ein leitungsvermitteltes Datenübertragungsnetz zwischen einem Teilnehmer 2 und einer Ansage-/ Dialogvorrichtung zeigt.

Im ersten Fall erfolgt die Übertragung von Sprachdaten (z.B. einer Ansage, eines Dialoges, Tönen, usw.) zwischen dem Teilnehmer 2 und der Ansage-/ Dialogvorrichtung 3 über eine klassische Fernsprechverbindung im TDM-Verfahren; die Übertragung zwischen der Ansage-/ Dialogvorrichtung 3 (B-Seite) mit der peripheren Einrichtung des Teilnehmers (A-Seite, periphere Teilnehmereinrichtung 8) erfolgt im gezeigten Beispiel zwar innerhalb der Vermittlungsstelle 8, jedoch wird der Einfachheit halber von einer Übertragung über ein leitungsvermitteltes Datenübertragungsnetz gesprochen.

Bei der Übertragung über ein leitungsvermitteltes Datenübertragungsnetz wird in der periphere Teilnehmereinrichtung 8 ein physikalischer Port 7 belegt. Ein Assoziativspeicher 10 (auch Koppelnetz) stellt die Verbindung zwischen der peripheren Teilnehmereinrichtung und der Ansage-/ Dialogvorrichtung her. Die Datenübertragung zwischen dem Teilnehmer 2 und der Ansage-/ Dialogvorrichtung erfolgt dann über die periphere Teilnehmereinrichtung 8, den Assoziativspeicher 10 und der Schnittstelle 5 zum leitungvermittelten Datenübertragungsnetz (TDM-Schnittstelle 5) der Ansage-/ Dialogvorrichtung 3 (in Fig. 4 gepunktet Dargestellt). Die Verbindung (z.B. Verbindungsauf- bzw. -abbau, Art der Ansage, usw.) wird mittels Signalisierung (strichpunktiert dargestellt) von einem Steuerprozezor 9 gesteuert.

Im zweiten Fall erfolgt die Übertragung der Sprachdaten über ein paketvermitteltes Datenübertragungsnetz 11 (Paketnetz 11), z.B. via IP-Protokoll; in Fig. 4 als gestrichelte Linie eingezeichnet. Zu diesem Zweck verfügt die Ansage-/ Dialogvorrichtung 3 über eine Schnittstelle 4 zum Paketnetz 11.

Gemäß der vorliegenden Erfindung verfügt die periphere Teilnehmereinrichtung 8 über einen virtuellen Port 6 zur Steuerung der Datenübertragung über das Paketnetz 11. Der virtuelle Port 6 bildet dabei eine Steuerinstanz zur Steuerung der Ansage-/ Dialogfunktionen, zum Steuern der Verbindung (z.B. mittels Übertragung von Lageinformationen.

Der virtuelle Port 6 ist somit erfindungsgemäß nicht als Hardware aufgebaut; damit entfällt die notwendige, physikalische Terminierung eines physikalischen Ports der peripheren Teilnehmereinrichtung 8, wie sie beim Stand der Technik erforderlich ist. Die zur Steuerung der Verbindung über ein paketvermitteltes Datenübertragungsnetz notwendige Signalisierung ist ebenfalls strichpunktiert eingezeichnet.

Gemäß der vorliegenden Erfindung werden somit Ansage- und Dialoginstanzen einer TDM-Vermittlungsstelle (Vermittlungsstelle 1) sowohl für TDM-Verbindungen (leitungsvermittelte Verbindungen) als auch für TDM-fremde Verbindungen, z. B. solche in Paketnetzen 11, gleichermaßen nutzbar gemacht.

Dazu wird die Rufsteuerung der TDM-fremden Verbindung von einer in der TDM-Vermittlungsstelle 1 angesiedelten Kontrollinstanz so gesteuert, dass die für Ansagen und Dialoge im TDM genutzte Einheit scheinbar eine TDM-Verbindung bedient. Dies wird durch die Einführung der bereits beschriebenen virtuellen Ports, die eine Steuereinheit, jedoch keine physikalische Repräsentation, in der TDM-Vermittlungsstelle 1 besitzen, errreicht.

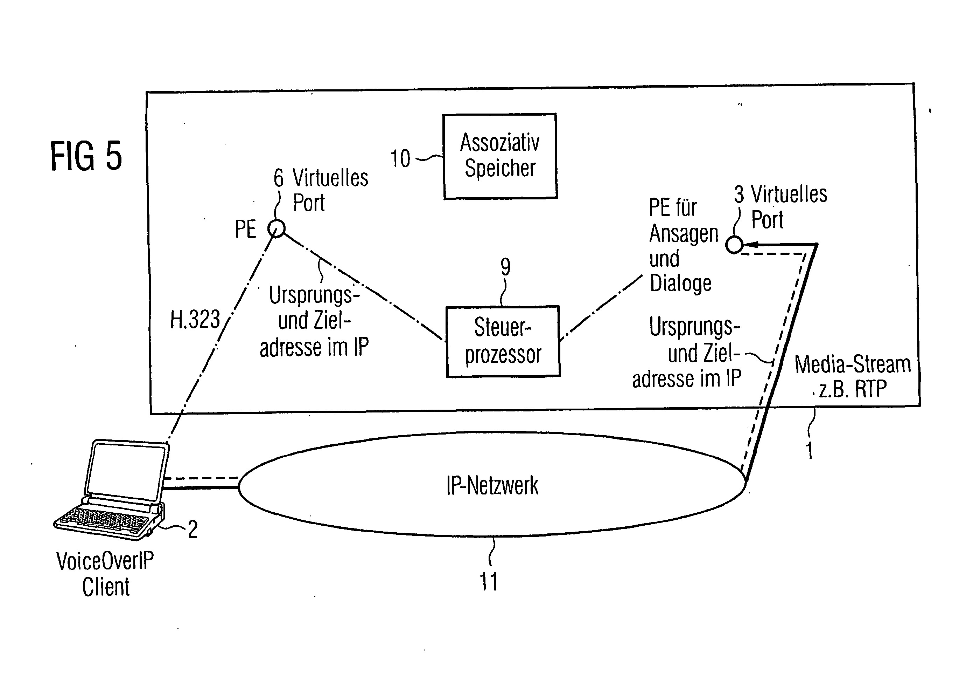

Eine TDM-fremde Verbindung wird entsprechend einem solchen virtuellen Port 5 zugeordnet, wie in Fig. 5 zu sehen ist (die Numerierung aus Fig. 4 wird in Fig. 5 beibehalten). Die Call Controll-Instanz dieses virtuellen Ports 6 belegt eine real verfügbares Ansage-/Dialogport und steuert die gewünschte Funktion (z. B. "Prompt und Collect") wie ein üblicher realer TDM-Port der Vermittlungsstelle 1. Neu ist, dass dieser Ansage-/Dialog-Port einen zusätzlichen Paketdatenzugang (ankommend und abgehend) bildet, der im Falle einer Verbindung aus dem Paketnetz benutzt wird um z. B. RTP-Datenströme (Real Time Protocol) zu versenden (wie etwa "Prompt") und zu empfangen (wie etwa "Collect").

Das Steuerprogramm des virtuellen Ports 6, welches die A-Seite der Paketdatenverbindung bildet, jedoch keine physikalische Repräsentation in der Vermittlungsstelle 1 selbst besitzt, hat jedoch Kenntnis über die Lage der A-Seite im Paketnetz (z. B. IP-Adresse). Diese "neue" Information wird im Meldungsspiel der Kontrollinstanz des jeweiligen Ports der Ansage-/Dialog-Einheit übermittelt, welche daraufhin nicht wie im TDM-Anwendungsfall den TDM-Port steuert, sondern den alternativen Paketdatenzugang (Schnittstelle zum paketvermittelten Datenübertragungsnetz) aktiviert und steuert.

Die jetzt paketaktivierte Kontrollinstanz der Ansage-/ Dialogvorrichtung übermittelt daraufhin dem virtuellen Port der Gegenseite die Lage des Paketdatenzugangs (z. B. die IP-Adresse), so dass der Mediastrom zu beiden Kommunikationspunkten im Paketnetz gesteuert werden kann.

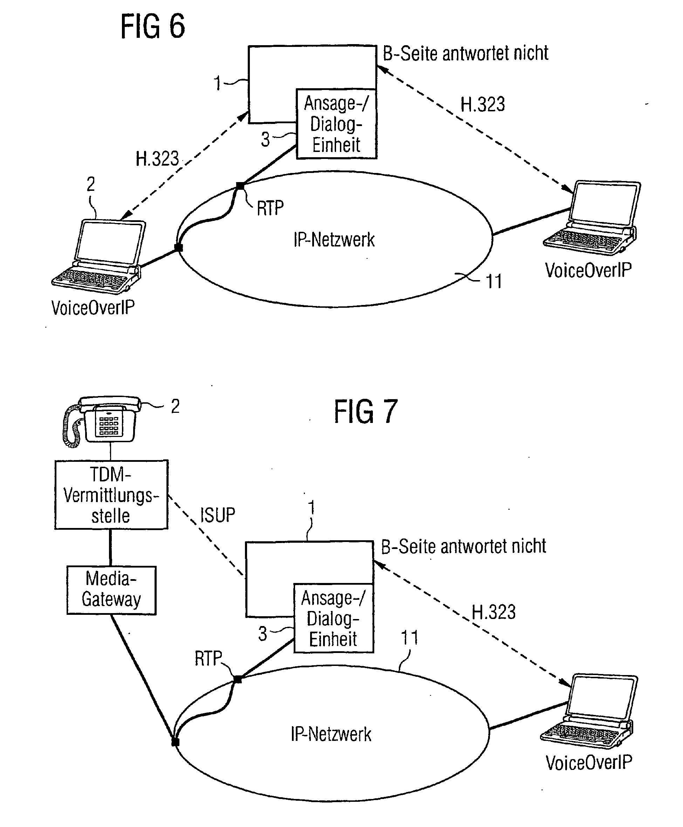

Prinzipiell werden zwei Anwendungsfälle des virtuellen Ports unterschieden, die jedoch für die Ansage-/ Dialogvorrichtung transparent bleiben:
Für Verbindungen aus dem Paketnetz in ein TDM-Netz (leitungsvermitteltes Datenübertragungsnetz) teilt das Kontrollprogramm des virtuellen Ports der A-Seite der Partnerinstanz aus der Ansage- und Dialog-Einheit die Lage der zur zugehörigen peripheren Einheit (z. B. Media Gateway) mit, die als Schnittstelle zwischen dem leitungsvermittelten und dem paketvermittelten Datenübertragungsnetz dient und den Paketdatenstrom in TDM wandelt bzw. TDM-Sprachinformationen in einem Paket-Mediastrom umsetzt, wie in Figur 7 gezeigt wird.

Für den Fall, dass der ferne Teilnehmer ebenfalls Paketnetz-Teilnehmer ist (IP/IP-Call) wird direkt die Adresse des fernen Teilnehmers im Meldungsverkehr übersendet, wie in Figur 6 gezeigt wird.

Die vorliegende Erfindung ermöglicht den kostengünstigen Einsatz eines eventuell bereits im TDM-Netz (leitungsvermittelten Datenübertragungsnetz) vorhandenen Ansage- und Dialogsystems für Sprachverkehr im Paketdatennetz. Dazu muss das bestehende System wie beschrieben lediglich geringfügig adaptiert werden.

Darüberhinaus ist das System gut skalierbar, da jeder Ansage-Port prinzipiell dynamisch einer TDM- oder einer Datennetz-(bzw. Paketnetz-) Verbindung zugeordnet werden kann. Ein weiterer Vorteil ist die systemimmanente Gleichartigkeit der Ansagen bzw. Dialogabläufe für Paketnetz- sowie für TDM-Teilnehmer, sowie die gemeinsame Administration der Ansagen bzw. Dialoge für leitungsvermittelte als auch für paketvermittelte Datenübertragungsnetze, d. h., es ist kein Abgleich mehrerer Systeme notwendig.

Alle diese Funktionen sind für das Paketdatennetz erreichbar, ohne dass zusätzliche TDM-Verbindungen, Schleifen o. ä. notwendig werden. Die Media-Daten verbleiben vollständig im Paketdatennetz. Leistungsmerkmale und dienste einer klassischen TDM-Vermittlungsstelle, die Ansage- und Dialogfunktionen betreffen, können für das Paketdatennetz ohne Aufwand bzw. mit geringem Aufwand synergetisch genutzt werden.

Die Besonderheit der vorliegenden Erfindung besteht darin, dass einer existierenden Ansage- und Dialog-Einheit im TDM-Netz zusätzliche Paketdaten-Zugänge zuzuordnen, ohne dass die kommunizierenden Systeme in der TDM-Vermittlungsstelle besonders angepasst werden müssen.

Die Anpassung konzentriert sich im Wesentlichen auf die Einführung von Lageinformationen (z. B. IP-Adresse), die im Meldungsspiel berücksichtigt werden muss. Abhängig von der jeweiligen Meldungsthematik (Lage vorhanden -> "neue Behandlung für Datennetze" oder Lage nicht gesendet -> "klassische Behandlung (TDM)") werden neue Programmanteile der Ansage-/Dialog-Einheit zur Ausführung gebracht. Alternativ kann dies jedoch auch statisch gewährleistet werden. Dabei werden an das TDM-basierte Ansagesystem für TDM-Verkehr spezifisches TDM-Ansageports eingerichtet und für IP-Ansagen und Dialoge virtuelle IP-Ports administriert.

Im Beispiel von Fig. 6 wird die klassische TDM-Ansage und Dialoginstanz für eine reine IP-Verbindung in einer Vermittlungsstelle eingesetzt. Zu bemerken ist, dass hier keinerlei TDM-Verbindungsleitungen oder Signalisierung zum Einsatz kommt. Sowohl die Signalisierung in (z. B. nach Standard H.323) als auch der Medienstrom (RTP) wird als IP-Paket übertragen.

Im Beispiel von Fig. 7 ist eine Sprachverbindung zwischen einem PSTN-(Public Switched Telephone Network, öffentliches Fernsprechnetz) Teilnehmer und einem IP-Teilnehmer dargestellt. Auch hier gilt dasselbe, wie im Beispiel von Fig. 6 beschrieben, lediglich wird der Teilnehmer aus dem PSTN mittels einem Trunk-Media-Gateway an das IP-Netz herangeführt.

## Patentansprüche

1. TDM-Vermittlungsstelle mit einer integrierten Ansage-/Dialogvorrichtung (3) zum Bereitstellen von Ansagen und/oder Dialogen für Teilnehmer (2), wobei die Ansage-/Dialogvorrichtung (3) die Übertragung von Sprachdaten über eine periphere Teilnehmereinrichtung (8) eines leitungsvermittelten Datenübertragungsnetzes im TDM-Verfahren überträgt,
**dadurch gekennzeichnet, dass**
die Ansage-/Dialogvorrichtung (3) eine Schnittstelle (4) zu einem paketvermittelten Datenübertragungsnetz (11) aufweist, wobei die Übertragung der Sprachdaten über das paketvermittelte Datenübertragungsnetz (11) erfolgt, und wobei die periphere Teilnehmereinrichtung (8) einen virtuellen Port (6) zum verbindungsorientierten Steuern der Ansage-/Dialogvorrichtung (3) bei einer über das paketvermittelte Datenübertragungsnetz (11) geführten Übertragung der Sprachdaten aufweist, und dass ein Steuerprozessor (9) Lageinformationen des Teilnehmers (2), die über den virtuellen Port (6) empfangen wurden, an die Ansage-/Dialogvorrichtung (3) überträgt, wobei die Lageinformationen des Teilnehmers (2) eine Adresse des Teilnehmers (2) im paketvermittelten Datenübertragungsnetz (11) enthält.

2. TDM-Vermittlungsstelle gemäß Anspruch 1, **dadurch gekennzeichnet, dass** die Ansage-/Dialogvorrichtung (3) oder der Steuerprozessor (9) Lageinformationen an den Teilnehmer (2) versendet bei einer über das paketvermittelte Datenübertragungsnetz (11) geführten Verbindung.

3. TDM-Vermittlungsstelle gemäß Anspruch 1 oder 2, **dadurch gekennzeichnet, dass** das leitungsvermittelte Datenübertragungsnetz das öffentliche Fernsprechnetz und das paketvermittelte Datenübertragungsnetz (11) ein IP-basiertes Datenübertragungsnetz ist.

4. TDM-Vermittlungsstelle gemäß Anspruch 1 oder 2, **dadurch gekennzeichnet, dass** die Lageinformationen eine IP-Adresse des Teilnehmers (2) bzw. der Ansage-/Dialogvorrichtung (3) enthält.

## Claims

1. TDM exchange having an integrated announcement/dialogue apparatus (3) for providing announcements and/or dialogues for subscribers (2), wherein the announcement/dialogue apparatus (3) transmits voice data via a peripheral subscriber device (8) of a circuit-switched data transmission network using the TDM method,
**characterized in that**
the announcement/dialogue apparatus (3) has an interface (4) to a packet-switched data transmission network (11),
wherein the voice data are transmitted via the packet-switched data transmission network (11), and
wherein the peripheral subscriber device (8) has a virtual port (6) for the connection-oriented control of the announcement/dialogue apparatus (3) when transmission of the voice data is routed via the packet-switched data transmission network (11), and **in that**
a control processor (9) transmits position information for the subscriber (2), which has been received via the virtual port (6), to the announcement/dialogue apparatus (3), wherein the position information for the subscriber (2) contains an address for the subscriber (2) in the packet-switched data transmission network (11).

2. TDM exchange according to Claim 1, **characterized in that** the announcement/dialogue apparatus (3) or the control processor (9) sends position information to the subscriber (2) when a connection is routed via the packet-switched data transmission network (11).

3. TDM exchange according to Claim 1 or 2, **characterized in that** the circuit-switched data transmission network is the public telephone network and the packet-switched data transmission network (11) is an IP-based data transmission network.

4. TDM exchange according to Claim 1 or 2, **characterized in that** the position information contains an IP address for the subscriber (2) or for the announcement/dialogue apparatus (3).

## Revendications

1. Centre de commutation TDM comportant un dispositif intégré d'annonce/de dialogue (3) pour fournir des annonces et/ou des dialogues à des abonnés (2), le dispositif d'annonce/de dialogue (3) transmettant la transmission de données vocales via un dispositif d'abonné périphérique (8) d'un réseau de transmission de données à commutation de circuits selon le procédé TDM, **caractérisé en ce que** le dispositif d'annonce/de dialogue (3) comporte une interface (4) vers un réseau de transmission de données à commutation de paquets (11), la transmission des donnés vocales s'effectuant sur le réseau de transmission de données à commutation de paquets (11) et le dispositif d'abonné périphérique (8) comportant un port virtuel (6) pour la commande orientée liaison du dispositif d'annonce/de dialogue (3) lors d'une transmission des données vocales passant par le réseau de transmission de données à commutation de paquets (11) et **en ce qu'**un processeur de commande (9) transmet au dispositif d'annonce/de dialogue (3) des informations de position de l'abonné (2) qui ont été reçues via le port virtuel (6), les informations de position de l'abonné (2) contenant une adresse de l'abonné (2) dans le réseau de transmission de données à commutation de paquets (11).

2. Centre de commutation TDM selon la revendication 1, **caractérisé en ce que** le dispositif d'annonce/de dialogue (3) ou le processeur de commande (9) envoie des informations de position à l'abonné (2) lors d'une liaison passant par le réseau de transmission de données à commutation de paquets (11).

3. Centre de commutation TDM selon la revendication 1 ou 2, **caractérisé en ce que** le réseau de transmission de données à commutation de circuits est le réseau téléphonique public et **en ce que** le réseau de transmission de données à commutation de paquets (11) est un réseau de transmission de données basé IP.

4. Centre de commutation TDM selon la revendication 1 ou 2, **caractérisé en ce que** les informations de position contiennent une adresse IP de l'abonné (2) resp. du dispositif d'annonce/de dialogue (3).
